# EUROPÄISCHE PATENTSCHRIFT

(11) **EP 1 726 085 B1**
(45) Veröffentlichungstag und Bekanntmachung des Hinweises auf die Patenterteilung: **07.05.2008**
(21) Anmeldenummer: 05715903.0
(22) Anmeldetag: 10.03.2005
(51) Int. Cl.: H02M 3/00

(54) **VERFAHREN ZUM BETREIBEN EINER VERSORGUNGSEINHEIT FÜR EINE TREIBERSCHALTUNG SOWIE VERSORGUNGSEINHEIT FÜR EINE TREIBERSCHALTUNG**
METHOD FOR OPERATING A SUPPLY UNIT FOR A DRIVER CIRCUIT, AND SUPPLY UNIT FOR A DRIVER CIRCUIT
PROCEDE DE FONCTIONNEMENT D'UNE UNITE D'ALIMENTATION D'UN CIRCUIT D'EXCITATION ET UNITE D'ALIMENTATION D'UN CIRCUIT D'EXCITATION

(30) Priorität: 17.03.2004 DE 102004013108
(43) Veröffentlichungstag der Anmeldung: 29.11.2006
(73) Patentinhaber: Beckhoff Automation GmbH, 33415 Verl (DE)
(72) Erfinder: PRÜSSMEIER, Uwe, 33657 Lemgo (DE); SACHS, Jens, 32469 Petershagen (DE)
(74) Vertreter: Patentanwaltskanzlei WILHELM & BECK
(86) Internationale Anmeldenummer: PCT/EP2005/002521
(87) Internationale Veröffentlichungsnummer: WO 2005/093934

(56) Entgegenhaltungen:
- DE-A1- 10 216 226
- HVBG HAUPTVERBAND DER GEWERBLICHEN BERUFSGENOSSENSCHAFTEN: "Sichere Antriebssteuerungen mit Frequenzumrichtern" BIA REPORT 5/2003, [Online] Mai 2003 (2003-05), Seiten 1-81, XP002330881 Gefunden im Internet: URL:http://www.hvbg.de/d/bia/pub/rep/rep04 /pdf_datei/rep5_03.pdf> [gefunden am 2005-06-06] in der Anmeldung erwähnt

## Beschreibung

Die Erfindung betrifft ein Verfahren zum Betreiben einer Versorgungseinheit für eine Treiberschaltung für eine Leistungsstufe, insbesondere für eine Leistungsschaltung für einen Elektromotor. Die Erfindung betrifft weiterhin eine Versorgungseinheit für eine Leistungsversorgung einer Treiberschaltung für eine Leistungsstufe.

Elektrische Antriebseinheiten umfassen in der Regel einen Elektromotor und eine Leistungselektronik. Die Leistungselektronik entnimmt einem Versorgungsnetz fester Frequenz und Spannung Energie und wandelt diese zur Erzeugung eines Drehfeldes in einem Motor um. Die Drehzahl und das Drehmoment des Motors wird durch die Leistungselektronik geregelt. Die Leistungselektronik umfasst in der Regel einen Servoverstärker oder in einen ungeregelten Antriebssystem einen Frequenzumrichter. Servoverstärker und Frequenzumrichter werden üblicherweise zusammenfassend als Wechselrichter bezeichnet und werden über eine in der Leistungselektronik vorgesehene Treiberschaltung angesteuert.

Bei dem Einsatz elektrischer Antriebseinheiten ist es notwendig, diese bei Fehlern oder Gefahren unmittelbar auszuschalten und sicher still zusetzen. D.h., der Motor darf sich unter keinen Umständen aufgrund einer elektrischen Ansteuerung bewegen.

Üblicherweise wird dazu die Energieversorgung der Leistungselektronik abgeschaltet, wie beispielsweise in der Druckschrift BIA Report 5/2003 "Sichere Antriebssteuerung mit Frequenzumrichtern", ISBN 3-88383-645-1 oder aus der Druckschrift Antriebstechnik 33 (1994), Nr. 10, "Vermeidung von unerwartetem Anlauf bei stromrichtergespeisten Antrieben", Erwin Zinken, BIA Sankt Augustin, bekannt ist. Dadurch kann der Motor zuverlässig gestoppt werden, da keine weitere Energie dem Motor zugeführt wird. Jedoch muss bei einem weiteren Anlauf die gesamte Leistungselektronik erneut eingeschaltet werden, was eine erhebliche Zeit beansprucht.

Eine weitere Möglichkeit ist es, den Motor von einem elektromechanischen Schalter, z. B. einem Schütz, von der Leistungselektronik zu trennen. Das plötzliche Schalten kann jedoch die Leistungselektronik leicht aufgrund von Überspannungen beschädigen. Zudem ist auch die Belastung für das Schütz sehr hoch, da hohe Stromstärken geschaltet werden müssen.

Eine weitere Lösung zum sicheren Abschalten des Drehfeldes liegt in der Unterdrückung des Zündimpulses. Zündimpulse entsprechen Steuersignalen, die von der Treiberschaltung in der Leistungselektronik generiert werden, die die Leistungsstufe der Leistungselektronik ansteuert. Die Leistungsstufe weist sechs elektronische Schalter auf, die über Steuersignale angesteuert werden, so dass die interne Gleichspannung in einen Dreiphasenwechselstrom umgerichtet wird. Der Zündimpuls kann auf verschiedene Weise unterdrückt werden. Üblich ist - wie aus der oben genannten Druckschrift BIA-Report 5/2003 bekannt - das Unterbrechen der Versorgungsspannung an der Treiberschaltung. Die Spannung wird üblicherweise im Fehlerfall durch ein Relais abgeschaltet. Das sichere Stillsetzen durch die Zündimpulsunterdrückung, d.h. durch Nicht-Erzeugen der Steuersignale, lässt alle übrigen Bauelemente der Leistungselektronik in voller Betriebsbereitschaft. Für die laufende Anwendung kann so das elektrische Antriebssystem unbemerkt in den sicheren Zustand versetzt und wieder aktiviert werden. Verzögerung beim Wiedereinschalten der Treiberschaltung treten im Wesentlichen nicht auf.

Das Schalten der Versorgungsspannung an der Treiberschaltung erfolgt bisher durch ein mechanisches Relais, das dem Verschleiß unterliegt. Durch ein solches mechanisches Schaltrelais lässt sich die Leistungselektronik nicht "Einfehlersicher" gestalten. "Einfehlersicherheit" bedeutet, dass beim Auftreten eines Fehlers in einem der sicherheitsrelevanten verwendeten Bauelemente die Ansteuerung des Motors unmittelbar gestoppt wird.

Es ist daher Aufgabe der vorliegenden Erfindung, ein Verfahren zum Betreiben einer Leistungsstufe in einer Leistungselektronik für einen Elektromotor zur Verfügung zu stellen, das insbesondere "Einfehlersicher" ausgeführt ist. Es ist weiterhin Aufgabe der vorliegenden Erfindung, eine Versorgungseinheit für eine Treiberschaltung, insbesondere zur Ansteuerung eines Motors zur Verfügung zu stellen, die "Einfehlersicher" ausgeführt ist.

Diese Aufgabe wird durch das Verfahren nach Anspruch 1 sowie die Versorgungseinheit nach Anspruch 11 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zum Betreiben einer Versorgungseinheit für eine Treiberschaltung, insbesondere in einer Leistungselektronik für einen Elektromotor, vorgesehen. Ein Steuerstrom wird durch einen induktiven Wandler mithilfe eines ersten und eines zweiten Schalters abhängig von einem ersten Steuersignal und einem zweiten Steuersignal geschaltet, um eine Leistungsversorgung für die Treiberschaltung zu generieren. Beim Ausschalten des ersten und des zweiten Schalters kann ein Freilaufstrom durch einen ersten bzw. einen zweiten Freilaufstrompfad fließen. Beim Ansteuern der Leistungsstufe werden zunächst der erste und der zweite Schalter gemäß dem ersten und dem zweiten Steuersignal eingeschaltet und anschließend z.B. gemäß einem Ansteuerwert der erste Schalter beim einem Ausschaltvorgang mithilfe des ersten Steuersignals ausgeschaltet. Beim Ausschaltvorgang wird der Freilaufstrom durch den ersten Freilaufstrompfad gemessen. Der zweite Schalter wird dann mithilfe des zweiten Steuersignals abhängig von dem gemessenen ersten Freilaufstrom geschaltet oder nicht.

Das erfindungsgemäße Verfahren hat den Vorteil, dass bei einer Versorgungseinheit bei einem in einem Normalbetrieb stattfindenden Schaltvorgang die Funktion des ersten Schalters überprüft wird, indem anhand des gemessenen Freilaufstroms erkannt wird, ob der erste Schalter gemäß dem ersten Steuersignal tatsächlich den Strompfad unterbrochen hat und somit ordnungsgemäß funktioniert. Da zum Generieren der Leistungsversorgung ein ständiges, im Wesentlichen gleichzeitiges, Ein- und Ausschalten beider Schalter notwendig ist, kann die Generierung der Leistungsversorgung unmittelbar unterbrochen werden, indem das Schalten eines der Schalter verhindert wird.

Gemäß einer ersten Alternative wird das Ausschalten des zweiten Schalters blockiert, wenn beim Messen des Freilaufstroms durch den ersten Freilaufstrompfad ein Fehler festgestellt wird. Da bei einem so erkannten Fehler der Ausschaltvorgang den ersten Schalter diesen tatsächlich nicht ausgeschaltet hat, bleibt somit der Stromkreis über dem induktiven Wandler geschlossen. Durch das Blockieren des Schaltens des zweiten Schalters findet jedoch kein weiterer Schaltvorgang statt, so dass keine Energie durch den induktiven Wandler übertragen werden kann.

Gemäß einer weiteren Alternative kann ein weiteres Einschalten des ersten und des zweiten Schalters blockiert werden, wenn beim Messen des Freilaufstroms durch den ersten Freilaufstrompfad ein Fehler festgestellt wird. In diesem Fall wird der zweite Schalter nach dem Erkennen des Fehlers ausgeschaltet. Dies hat den Vorteil gegenüber der ersten Alternative, dass kein dauerhafter Gleichstrom durch den induktiven Wandler fließen kann, der unter Umständen zu seiner Zerstörung führen kann.

Es kann vorgesehen sein, dass bei einem weiteren Schaltvorgang zunächst der erste und zweite Schalter gemäß dem ersten und dem zweiten Steuersignal erneut eingeschaltet werden und anschließend der zweite Schalter bei einem weiteren Ausschaltvorgang mithilfe des zweiten Steuersignals ausgeschaltet wird. Infolge wird der Freilaufstrom durch den zweiten Freilaufstrompfad gemessen und der erste Schalter mithilfe des ersten Steuersignals abhängig von dem gemessenen Freilaufstrom durch den zweiten Freilaufstrompfad geschaltet. Auf diese Weise kann auch die Funktion des zweiten Schalters überprüft werden.

Insbesondere kann im Wechsel bei jedem Schaltzyklus einer der beiden Schalter auf seine korrekte Funktionsweise, d.h. auf sein korrektes Ausschalten hin überprüft werden. Unterbricht einer der beiden Schalter nicht ordnungsgemäß den jeweiligen Strompfad, so wird beim anschließenden Überprüfen des Schaltverhaltens das weitere Schalten des jeweils anderen Schalters blockiert, so dass keine weitere Spannungs- bzw. Stromänderung an dem induktiven Wandler erfolgt, um eine weitere Energieübertragung und somit die Leistungsversorgung unmittelbar zu stoppen. Die Ansteuerung der Leistungsstufe der Leistungselektronik wird so unterbunden, so dass keine Energie für das Generieren eines Drehfelds für einen nachgeschalteten, stillzusetzenden Elektromotor bereitgestellt wird.

Wenn beim Messen des Freilaufstroms durch den zweiten Freilaufstrompfad ein Fehler festgestellt wird, kann zum einen ein weiteres Einschalten des ersten und des zweiten Schalters blockiert werden und/oder das Ausschalten des ersten Schalters blockiert werden, analog zur Vorgehensweise bei der Überprüfung des ersten Freilaufstrompfades.

Es kann vorgesehen sein, dass das erste und/oder das zweite Steuersignal mithilfe eines periodischen Signals generiert wird. Das periodische Signal kann zum Generieren des ersten und/oder des zweiten Steuersignals blockiert werden, wenn beim Messen des Freilaufstroms durch den ersten und/oder den zweiten Freilaufstrompfad ein Fehler festgestellt wird. Das Blockieren des zum Generieren der Steuersignale notwendigen periodischen Signals stellt eine Möglichkeit dar, die Schaltvorgänge des ersten und des zweiten Schalters unmittelbar zu stoppen.

Gemäß einem weiteren Aspekt der vorliegenden Erfindung ist eine Versorgungseinheit für eine Treiberschaltung für eine Leistungsstufe, insbesondere in einer Leistungselektronik für einen Elektromotor vorgesehen. Die Treiberschaltung weist einen induktiven Wandler auf, der mit einem ersten und einem zweiten Schalter in Reihe geschaltet ist, um durch Schalten der Schalter eine Leistungsversorgung bereitzustellen. Der erste und zweite Schalter ist durch ein erstes bzw. ein zweites Signal ansteuerbar. Die Leistungsversorgung ist in dem induktiven Wandler durch Ein- und Ausschalten des ersten und des zweiten Schalters erzeugbar. Mit dem ersten Schalter ist ein erster Freilaufstrompfad verbunden, um einen Freilaufstrom bei einem Ausschaltvorgang des ersten Schalters aufzunehmen. Der zweite Schalter ist mit einem zweiten Freilaufstrompfad verbunden, um einen Freilaufstrom bei einem Ausschaltvorgang des zweiten Schalters aufzunehmen. Die Treiberschaltung weist eine Steuereinrichtung auf, um bei einem Einschaltvorgang den ersten und den zweiten Schalter gemäß dem ersten und dem zweiten Steuersignal einzuschalten und um bei einem Ausschaltvorgang zunächst den ersten Schalter auszuschalten und einen Freilaufstrom durch den ersten Freilaufstrompfad zu messen, und um abhängig von dem gemessenen Freilaufstrompfad den zweiten Schalter zu schalten.

Die erfindungsgemäße Versorgungseinheit dient zum Betreiben einer Treiberschaltung für eine Leistungsstufe mit einer Leistungsversorgung, die durch Ein- und Ausschalten einer Versorgungsspannung an einem induktiven Wandler erzeugt wird. Das Ein- und Ausschalten erfolgt mithilfe von zwei Schaltern, die im wesentlichen gleichzeitig geschaltet werden sollen. Die Steuereinrichtung schaltet zunächst die beiden Schalter gleichzeitig ein und anschließend, z.B. gemäß einem Ansteuerwert, den ersten Schalter aus. Ist der erste Schalter defekt und unterbricht den Strompfad durch den induktiven Wandler nicht, so wird dies durch das Messen des Freilaufstroms durch den ersten Freilaufstrompfad festgestellt und ein weiteres Schalten des zweiten Schalters blockiert. Wird ein ordnungsgemäßes Schalten der ersten Schaltung festgestellt, so wird der zweite Schalter ebenfalls ausgeschaltet, so dass zwischen dem Ausschalten des ersten Schalters und dem Ausschalten des zweiten Schalters eine möglichst geringe Zeitdauer liegt.

Der erste Freilaufstrompfad kann einen ersten Stromsensor und/oder eine erste Freilaufdiode aufweisen. Der zweite Freilaufstrompfad kann einen zweiten Stromsensor und/oder ein zweite Freilaufdiode aufweisen.

Die Steuereinrichtung kann so gestaltet sein, um bei einem weiteren Ausschaltvorgang zunächst den zweiten Schalter auszuschalten und einen Freilaufstrom durch den zweiten Freilaufstrompfad zu messen, um abhängig von dem gemessenen Freilaufstrom den ersten Schalter zu schalten. Dadurch kann erreicht werden, dass im Wechsel zunächst der erste und dann der zweite Schalter bei jedem Ein-/Ausschaltvorgang als erstes ausgeschaltet wird, um somit nacheinander die Funktion des ersten und des zweiten Schalters zu überprüfen.

Gemäß einer weiteren Ausführungsform umfasst die Versorgungseinheit eine erste Steuerschaltung und eine zweite davon getrennte Steuerschaltung, wobei die erste Steuerschaltung das Schalten des ersten Schalters steuert und den Strom durch den ersten Feilaufstrompfad misst. Die zweite Steuerschaltung steuert entsprechend das Schalten des zweiten Schalters durch den zweiten Freilaufstrompfad. Die erste Steuerschaltung und die zweite Steuerschaltung sind so miteinander gekoppelt, dass die erste Steuerschaltung das erste Steuersignal abhängig von einem von der zweiten Steuerschaltung angelegten zweiten Aktiv-Signal generiert und die zweite Steuerschaltung in umgekehrter Weise das zweite Steuersignal abhängig von einem von der ersten Steuerschaltung angelegten Aktiv-Signal generiert.

Auf diese Weise kann eine Einfehler-Sicherheit erreicht werden, die das Generieren von Steuersignalen und somit das Bereitstellen der Leistungsversorgung unterbrochen wird, sobald ein Fehler in einem der Schalter, in einem der Freilaufpfade oder in einem der Steuerschaltungen auftritt. Sobald die Steuerschaltung den Fehler in dem jeweils zugeordneten Schalter erkennt, prüft sie die Funktionsfähigkeit des Schalters. Indem die Steuerschaltung das Aktiv-Signal generiert, das von der jeweils anderen Steuerschaltung benötigt wird, um den zugehörigen Schalter anzusteuern, wird auch bei einem Ausfall einer der Steuerschaltungen das Bereitstellen der Leistungsversorgung unterbrochen. Somit ist die erfindungsgemäße Treiberschaltung "Einfehlersicher", da bei Auftreten eines Fehlers in einem der Bauelemente das Bereitstellen der Leistungsversorgung unmittelbar unterbrochen wird.

Damit wird das erste und das zweite Aktiv-Signal nicht fehlerhaft generiert werden kann, wird dieses als periodisches Signal oder als Signalabfolge von der jeweiligen Steuerschaltung zur Verfügung gestellt, so dass bei einem Fehlerfall die Erzeugung des periodischen Aktiv-Signals anhält. Das periodische Signal oder die Signalabfolge haben den Vorteil, dass bei einem Fehler in der jeweiligen Steuerschaltung, der zu einem permanenten Zustand des Aktiv-Signals führen würde, dieser Zustand nicht dazu führt, dass in der doppelten anderen Steuerschaltung weiterhin das jeweilige Steuersignal generiert wird.

Vorzugsweise weist ist der induktive Wandler als ein Transformator ausgeführt.

Gemäß einer Ausführungsform der Erfindung ist die Steuereinrichtung so gestaltet, um das erste und/oder das zweite Steuersignal mithilfe eines bereitgestellten Taktsignals zu generieren. Bei Auftreten eines Fehlers kann das Taktsignal unterbrochen werden, so dass das Generieren des ersten und des zweiten Steuersignals unterbrochen wird.

Bevorzugte Ausführungsformen der Erfindung werden im folgenden anhand der beigefügten Zeichnungen näher erläutert. Es zeigen:
Figur 1 ein Blockdiagramm zur Darstellung eines Antriebssystems;
Figur 2 ein Blockschaltbild der erfindungsgemäßen Treiberschaltung; und
Figur 3 ein Signalverlaufsdiagramm zur Verdeutlichung der Ansteuerung der Schalter der Treiberschaltung.

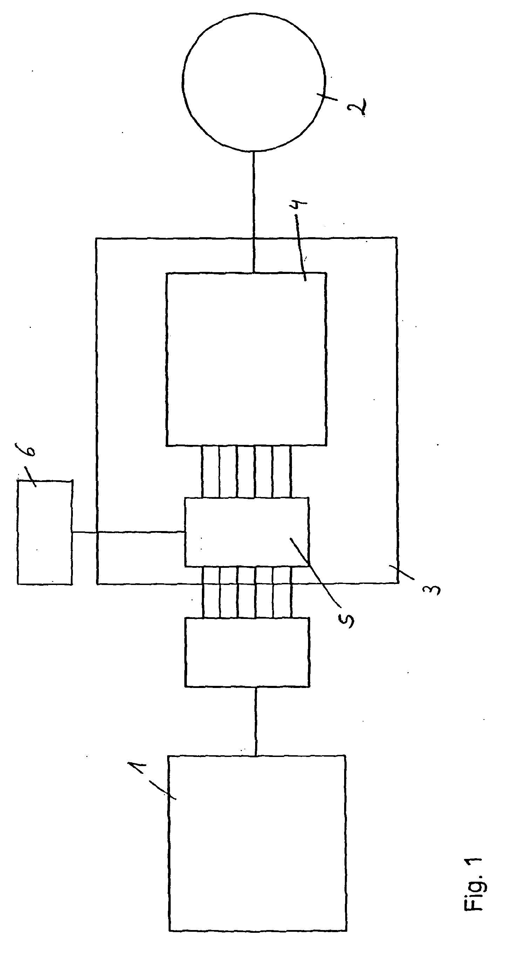

In Figur 1 ist ein Blockdiagramm zur Ansteuerung eines Elektromotors in einem Antriebssystem vorgesehen. In einem Steuersystem 1 werden Ansteuerwerte generiert, wobei abhängig von den Ansteuerwerten ein Elektromotor 2 angesteuert werden soll. Die Ansteuerung des Elektromotors 2 erfolgt üblicherweise mithilfe einer Leistungselektronik 3, die eine Leistungsstufe 4 umfasst. Die Leistungsstufe 4 generiert im gezeigten Beispiel drei Phasenströme und weist dafür typischerweise 6 elektronische Schalter (nicht gezeigt) auf, die mit jeweiligen Schaltsignalen von einer Treiberschaltung 5 angesteuert werden. Der Elektromotor 2 ist vorzugsweise als Synchron- oder Asynchronmotor aufgebaut, insbesondere als ein Elektromotor, der mit einem elektrischen Drehfeld betrieben werden kann und keine eigene Kommutierung besitzt.

Die Leistungsstufe 4 dient dazu, das Drehfeld in der notwendigen Stromstärke zum Betreiben des Elektromotors 2 zur Verfügung zu stellen. Die Schaltsignale, mit denen die Leistungsstufe 4 angesteuert werden, werden von der Treiberschaltung 5 zur Verfügung gestellt.

In einigen Anwendungsgebieten ist es erforderlich, dass der Elektromotor 3 bei Auftreten eines Fehlers unmittelbar still gesetzt wird, damit der Elektromotor 2 nicht unkontrolliert weiterläuft. Dies wird durchgeführt, indem die Treiberschaltung 5 der Leistungselektronik 3 das Generieren des jeweiligen Schaltsignals unmittelbar unterbricht, sobald ein Fehler erkannt worden ist. Um das Drehstromfeld für den Elektromotor 2 zu generieren ist eine bestimmte Abfolge an Schaltsignalen notwendig. Unterbindet die Treiberschaltung diese Schaltsignale ist die Drehfelderzeugung unmöglich. Dadurch kann der Elektromotor 2 stillgesetzt werden.

Das Unterbrechen der Generierung der Schaltsignale in der Treiberschaltung 5 wird insbesondere durch Unterbrechen der Leistungsversorgung der Treiberschaltung 5 durchgeführt. Die Leistungsversorgung erfolgt durch eine Versorgungseinheit 6, die mit der Treiberschaltung 5 verbunden ist.

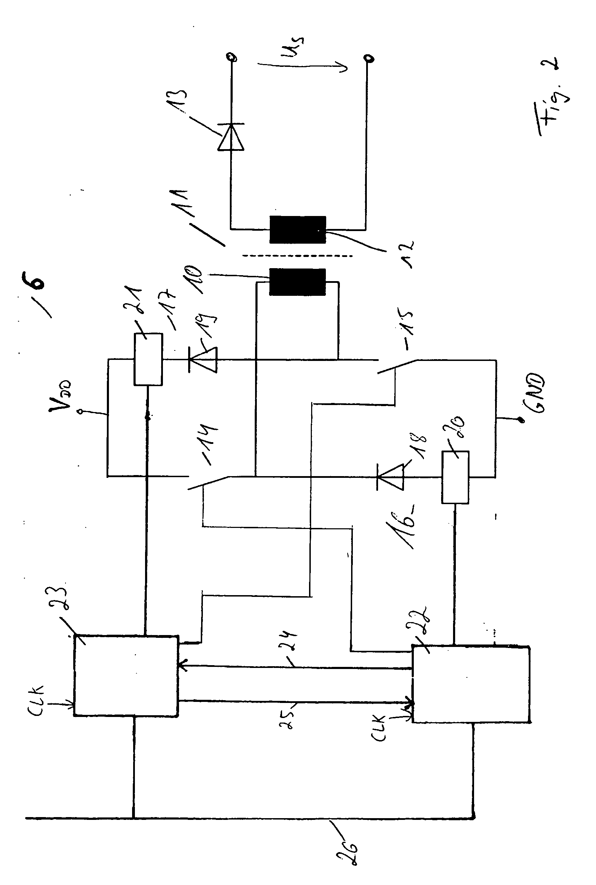

In Figur 2 ist ein Schaltbild einer erfindungsgemäßen Versorgungseinheit 6 für eine Treiberschaltung 5 dargestellt. Die Leistungsversorgung in Form einer Versorgungsspannung wird der Treiberschaltung 5 zur Verfügung gestellt, die Schaltsignale generiert, die an die elektronischen Schalter der Leistungsstufe 4 weitergeleitet werden.

Die Schaltsignale werden galvanisch getrennt und liegen in einem Spannungsbereich, der für einen elektronischen Schalter einer nachfolgenden Leistungsstufe sinnvoll ist. Typischerweise ist der Gateeingang eines Leistungsfeldeffekttransistors in der Leistungsstufe eingebaut. Das Schaltsignal ist im Wesentlichen ein pulsweitenmoduliertes Signal, das Ein- und Aus-Zustände an die Leistungsstufe überträgt.

Die Leistungsstufe (nicht gezeigt) schaltet dann gemäß dem Schaltsignal eine Spulenwicklung des Elektromotors ein oder aus.

Die Versorgungseinheit 6, die in Figur 2 dargestellt ist, generiert als Leistungsversorgung eine Versorgungsspannung, die abhängig von einem Schalten eines Signals an einer Primärspule 10 eines Transformators 11 in einer Sekundärspule 12 erzeugt wird. Da beim Ein- und Ausschalten des Stromflusses durch die Primärspule positive wie negative Spannungen in der Sekundärspule 12 erzeugt werden, wird dieses entstehende Spannungssignal mithilfe einer Gleichrichterdiode 13 gleichgerichtet und vorzugsweise durch eine (nicht gezeigte) Kapazität geglättet, so dass im Wesentlichen eine positive Spannung an die Treiberschaltung 5 angelegt ist.

Die Primärspule 10 ist in Reihe mit einem ersten Schalter 14 und einem zweiten Schalter 15 zwischen einem hohen Versorgungsspannungspotential VDD und einem niedrigen Versorgungsspannungspotential, vorzugsweise einem Massepotential GND, geschaltet. Der erste und/oder der zweite Schalter 14, 15 sind vorzugsweise als Feldeffekttransistoren ausgebildet, wobei die jeweils über einen entsprechenden Gateanschluss mit einem Steuersignal ansteuerbar sind. Um den Transformator 11 zu schalten, werden üblicherweise der erste und der zweite Schalter 14, 15 gleichzeitig ein- und ausgeschaltet, so dass durch die Schaltvorgänge in der Primärspule 10 das entsprechende Spannungssignal in die Sekundärspule 12 des Transformators 11 induziert wird.

Insbesondere beim Ausschaltvorgang wird durch die Induktivität der Primärspule 10 ein Freilaufstrom erzeugt, der die entgegengesetzte Richtung wie der Stromfluss im eingeschalteten Zustand der Primärspule 10 aufweist. Damit dieser Strom nicht zu schädlichen Überspannungen an den Feldeffekttransistoren und anderen Bauteilen der Treiberschaltung führt, ist für jeden der Schalter 14, 15 ein Freilaufstrompfad 16, 17 vorgesehen.

Der erste Schalter 14 ist zwischen dem hohen Versorgungspotential VDD und einem ersten Anschluss der Primärspule 10 angeordnet. Der erste Anschluss der Primärspule 10 ist über den ersten Freilaufstrompfad 16 mit dem Massepotential verbunden, so dass ein Freilaufstrom beim Ausschalten des ersten Schalters zu dem Massepotential GND abfließen kann. Der zweite Schalter 15 ist zwischen einem zweiten Anschluss der Primärspule 10 und dem Massepotential GND angeordnet. Der zweite Anschluss der Primärspule 10 ist ebenfalls über einen zweiten Freilaufstrompfad 17 mit dem hohen Versorgungsspannungspotential VDD verbunden.

Damit beim Einschalten der Schalter kein Kurzschluss zwischen dem hohen Versorgungspotential VDD und dem Massepotential GND hervorgerufen wird, sind in dem ersten Freilaufstrompfad 16 eine erste Freilaufdiode 18 und in dem zweiten Freilaufstrompfad 17 eine zweite Freilaufdiode 19 so angeordnet, dass eine am ersten Anschluss der Primärspule 10 anliegende, gegenüber dem Massepotential negative Spannung, über den ersten Freilaufstrompfad 16 und eine an dem zweiten Anschluss der Primärspule 10 anliegende, gegenüber dem hohen Versorgungspotential VDD größere Spannung über die den zweiten Freilaufstrompfad 17 abgeführt wird, da die jeweilige Freilaufdiode 18, 19 in diese Richtung leitend wird.

Der erste Freilaufstrompfad 16 weist einen ersten Stromsensor 20 auf und der zweite Freilaufstrompfad 17 einen zweiten Stromsensor 21, um die jeweiligen Freilaufströme durch die Freilaufstrompfade 16, 17 zu messen. Die Stromsensoren 20, 21 können beispielsweise mithilfe eines Messwiderstandes, z.B. einem Shunt, ausgebildet sein oder einen Magnetfeld-Stromsensor aufweisen, bei dem der Widerstand in dem jeweiligen Freilaufstrompfad nicht durch einen Messwiderstand beeinflusst wird. Um einen Freilaufstrom zu messen, ist es auch möglich den Freilaufstrom durch eine Messung des Stroms durch den entsprechenden Schalter festzustellen.

Es ist eine erste Steuerschaltung 22 und eine zweite Steuerschaltung 23 zum Generieren der Steuersignale für die Schalter 14, 15 vorgesehen. Die erste Steuerschaltung 22 ist mit dem ersten Stromsensor 20 verbunden, so dass ein gemessener Freilaufstrom in dem ersten Freilaufstrompfad 16 in der ersten Steuerschaltung 22 zur Verfügung gestellt wird. Die erste Steuerschaltung 22 ist mit einem ersten Steueranschluss des ersten Schalters 14, insbesondere mit dem Gateanschluss des Feldeffekttransistors, verbunden. Die zweite Steuerschaltung 22 ist mit dem zweiten Stromsensor 23 verbunden, so dass der gemessene Freilaufstrom in dem zweiten Freilaufstrompfad 17 in der zweiten Steuerschaltung zur Verfügung steht. Die zweite Steuerschaltung 23 ist mit einem Steuereingang des zweiten Schalters 15, d.h. dem Gateanschluss des zweiten Feldeffekttransistors verbunden.

Die erste Steuerschaltung 22 ist über eine erste Aktiv-Signalleitung 24 mit der zweiten Steuerschaltung 23 verbunden, um ein Aktiv-Signal an die zweite Steuerschaltung 23 zu übermitteln. Es ist eine zweite Aktiv-Signalleitung 25 vorgesehen, so dass die zweite Steuerschaltung 23 ein zweites Aktiv-Signal an die erste Steuerschaltung 22 übermitteln kann. Die Steuerschaltungen 22, 23 erhalten über eine Signalleitung 26 ein von extern vorgegebenes Freigabesignal, der die Ansteuerung des Elektromotors 2 zulässt oder blockiert. Jede der Steuerschaltungen 22, 23 weist darüber hinaus einen Eingang für ein Taktsignal CLK auf. Mit diesem Takt werden die Steuerschaltungen synchronisiert.

Im folgenden wird die Arbeitsweise der ersten Steuerschaltung 22 bezüglich des ersten Schalters 14 und des ersten Freilaufstrompfades 16 beschrieben, wobei die zweite Steuerschaltung 23 im Wesentlichen dazu analog bezüglich des zweiten Schalters und des zweiten Freilaufstrompfades 17 arbeitet.

Die erste und zweite Steuerschaltung 22, 23 empfangen den Freigabewert über die Datenleitung 26 und generieren mit Beginn der Periodendauer jeweils ein Einschaltsignal als erstes bzw. zweites Steuersignal, das dem ersten Schalter 14 bzw. dem zweiten Schalter 15 zugeführt wird, z.B. ein High-Pegel. Aufgrund des jeweiligen Einschaltsignals schalten die Schalter 14 und 15 ein, so dass das hohe Versorgungspotential VDD mit dem ersten Anschluss der Primärspule 10 und das niedrige Versorgungspotential GND mit dem zweiten Anschluss der Primärspule 10 verbunden werden. Nach Ablauf einer Einschaltzeitdauer wird das erste Steuersignal so geschaltet, dass der erste Schalter 14 ausgeschaltet wird, z.B. durch einen Übergang auf einen Low-Pegel. Durch den Ausschaltvorgang entsteht eine Freilaufspannung an der Primärspule 10 des Transformators 11, die über den ersten Freilaufstrompfad 16 abgebaut wird.

Der Freilaufstrom in dem ersten Freilaufstrompfad 16 wird mithilfe des ersten Stromsensors 20 gemessen und der Messwert der ersten Steuereinrichtung 22 zur Verfügung gestellt. Dort wird der gemessene Stromwert mit einem Schwellstromwert verglichen, der so gewählt ist, das festgestellt werden kann, dass ein nennenswerter Freilaufstrom fließt. Auf diese Weise kann das Schaltverhalten des ersten Schalters 14 überprüft werden. Wenn nämlich der erste Schalter 14 aufgrund des Steuersignals nicht unterbrochen wird, wird der Strompfad durch die Primärspule 10 nicht unterbrochen, und es entsteht keine Freilaufspannung, die über den ersten Freilaufstrompfad 16 abgebaut werden müsste. Dies wird in der ersten Steuerschaltung 22 als Fehler detektiert und ein weiteres Generieren eines Steuersignals zum Einschalten des Schalters 14 unterbunden.

Wird ein Freilaufstrom im ersten Freilaufstrompfad gemessen, der den Schwellstromwert übersteigt, so generiert die erste Steuerschaltung 22 ein Aktiv-Signal auf der ersten Aktiv-Signalleitung 24, wodurch das Aktiv-Signal an die zweite Steuerschaltung 23 übermittelt wird. Bei Empfang des entsprechenden Aktiv-Signals schaltet die zweite Steuerschaltung 23 den zweiten Schalter 15 sofort aus, so dass bezüglich der gesamten Periodendauer der Steuersignale nur ein geringer Zeitverzug zwischen dem Ausschalten des ersten Schalters und dem Ausschalten des zweiten Schalters entsteht, der keine wesentlichen Auswirkungen auf das Generieren des Schaltsignals hat.

Die erste und die zweite Steuerschaltung 22, 23 arbeiten im Wesentlichen synchron, so dass es vorteilhaft ist, wenn das gleiche Taktsignal CLK an beiden Steuerschaltungen 22, 23 anliegt. Die beiden Steuerschaltungen 22, 23 sind so aufeinander abgestimmt, dass immer nur eine der beiden Steuerschaltungen während eines Taktzyklus das Steuersignal zum Ausschalten des jeweiligen Schalters 14, 15 selbsttätig ohne ein vorhergehendes Empfangen des Aktiv-Signals generiert. Vorzugsweise arbeiten die beiden Steuerschaltungen bezüglich des Ausschaltsignals asynchron, wobei insbesondere bei einem ersten Taktzyklus die erste Steuerschaltung das erste Steuersignal zum Ausschalten des ersten Schalters 14 unabhängig generiert und die zweite Steuerschaltung 23 das Steuersignal zum Ausschalten des zweiten Schalters 15 von dem erfolgten Abschalten des ersten Schalters 14 abhängig macht. In einem zweiten Taktzyklus generiert dann die zweite Steuerschaltung 23 das Steuersignal zum Ausschalten des zweiten Schalters 15 unabhängig von dem Aktiv-Signal und die erste Steuerschaltung 22 abhängig von dem bei erfolgreichem Ausschalten des zweiten Schalters 15 durch die zweite Steuerschaltung 23 generierten Aktiv-Signal.

Das jeweilige Aktiv-Signal zeigt der jeweiligen Steuerschaltung 22, 23 an, dass nun das Steuersignal zum Ausschalten des jeweiligen Schalters 14, 15 generiert werden muss. Das erfolgte Ausschalten des jeweiligen Schalters wird vorzugsweise durch eine geeignete Flanke des Aktiv-Signals angezeigt, da diese aktiv von der jeweiligen Steuerschaltung generiert werden muss. Somit können auch Fehler, die in einer der Steuerschaltungen auftreten, zum sofortigen Unterbrechen des Generierens des Schaltsignals führen, da das Aktiv-Signal nur von einer ordnungsgemäß funktionierenden Steuerschaltung 22, 23 erzeugt werden kann. Dadurch wird die vorgestellte Versorgungseinheit 6 "Einfehlersicher", d.h. beim Auftreten eines Fehlers in einem der verwendeten Bauteile sofort das Generieren des Schaltsignals unterbrochen wird, so dass das Drehfeld zur Ansteuerung des Elektromotors 2 nicht länger erzeugt wird.

Die vorgeschlagene Versorgungseinheit ist also so gestaltet, dass Fehler beim Ausschalten eines der Schalter 14, 15 sofort dazu führen, dass nicht länger ein entsprechendes Schaltsignal generiert wird. Da auch die entsprechende Steuerschaltung 22, 23 Fehler aufweisen kann und dann evtl. einen entsprechenden Fehler beim Schalten des jeweiligen Schalters nicht mehr erkennt, muss die Steuerschaltung aktiv ein Aktiv-Signal generieren, wenn das Ausschalten des mit ihr verbundenen Schalters festgestellt worden ist. Dies würde bei einer fehlerhaften Steuerschaltung nicht generiert werden, so dass die jeweils andere Steuerschaltung kein Ausschaltsignal generiert. Auch beim nachfolgenden Taktzyklus würden keine Steuersignale generiert werden, die zum Schalten eines der Schalter 14, 15 führen. Somit kommt es beispielsweise bei einem Fehler des ersten Schalters 14, bei dem der erste Schalter 14 von seinem eingeschalteten Zustand in seinen ausgeschalteten Zustand nicht mehr schaltet, dazu, dass auch der zweite Schalter 15 nicht mehr ausgeschaltet wird, da das von der zweiten Steuereinrichtung 23 benötigte Aktiv-Signal von der ersten Steuerschaltung 22 nicht mehr generiert werden würde. Somit bleibt der Strompfad durch die Primärspule 10 erhalten. Da keine Stromänderung in der Primärspule 10 mehr auftritt, wird auch keine Energie in die Sekundärspule 12 übertragen, so dass die Versorgungsspannung abgeschaltet wird.

Alternativ kann auch vorgesehen sein, dass beim Auftreten eines Fehlers der durch eine der Steuerschaltungen erkannt wird und der anderen durch das nicht Vorliegen des ordnungsgemäßen Aktiv-Signals angezeigt wird, dazu führen, dass die Steuerschaltung ein Steuersignal zum Abschalten des mit ihr verbundenen Schalters generiert, um den Strompfad durch die Primärspule 10 in jedem Fall zu unterbrechen, da ansonsten sehr hoher Gleichstrom durch die Primärspule 10 fließen würde, der diese zerstören könnte. Das führt allerdings zu einem weiteren Schaltvorgang, bei dem kurzfristig weiter Energie in die Sekundärspule 12 übertragen wird und somit eine weitere Flanke des Schaltsignals erzeugt, so dass das Abschalten des Drehfeldes zur Ansteuerung des Elektromotors 2 weiter erzeugt werden würde. Je nach Anwendung, in der der Elektromotor 2 betrieben wird, ist dies jedoch eine vernachlässigbar geringe Zeitdauer im Bereich von wenigen µsec.

Ebenfalls können Fehler in einer der Freilaufdioden 18, 19 erkannt werden. Für den Fall, dass eine der Freilaufdioden 18, 19 rückwärts leitend werden, gibt es einen Kurzschluss zwischen dem hohen Versorgungspotential VDD und dem Massepotential GND und der sichere Zustand wird erreicht. Die Schaltung wäre dann ohne Funktion. Wenn die betreffende Diode jedoch vorwärts nicht leitend wird, behindert dieser Ausfall die Funktion nicht, ist aber sicherheitsrelevant, wenn ein Transistor mit einem Kurzschluss ausfällt. Der Fehler, dass die jeweilige Freilaufdiode 18, 19 vorwärts nicht leitend wird, führt dazu, dass der Stromsensor 20, 21 keinen Freilaufstrom misst, wodurch die jeweilige Steuerschaltung kein Aktiv-Signal generiert, da sie das Ausschalten des jeweiligen Schalters 14, 15 nicht feststellen kann. Somit wird bei einer fehlerhaften Diode entweder ein Kurzschluss in der Schaltung erzeugt, die den Elektromotor zum Stillstand bringt oder die Generierung des betreffenden Steuersignals blockiert. Ein wichtiger Vorteil einer solchen Versorgungseinheit ist, dass die Diagnoseintervalle nur einen Zyklus des Taktsignals CLK betragen, so dass diese in kurzen Zeitabständen von beispielsweise 50 µsec durchgeführt werden können.

Ferner steht ein übergeordnetes Steuersystem (nicht gezeigt) in Verbindung mit den Steuereinheiten 22 und 23. Würde ein nicht mehr ordnungsgemäß arbeiten, blockiert das Steuersystem das Freigabesignal, so dass die Steuereinheiten 22, 23 keine Steuersignale mehr generieren.

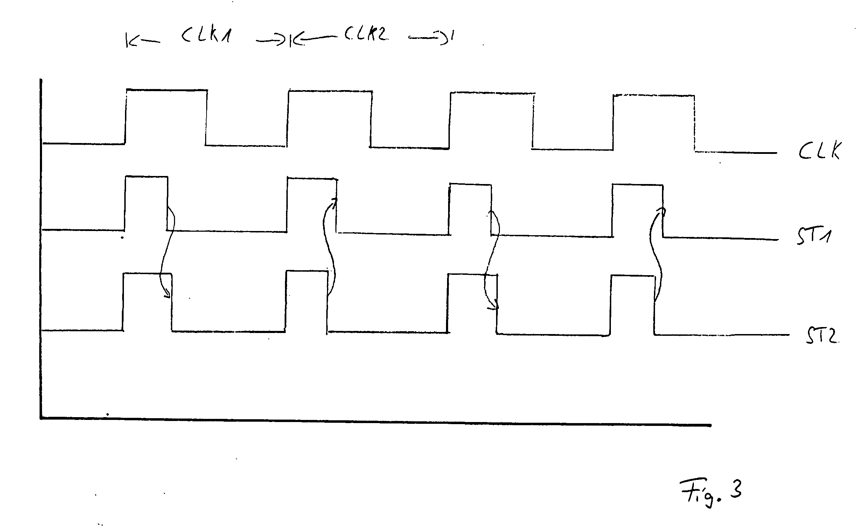

In Figur 3 ist ein Signaldiagramm zur Veranschaulichung der Verläufe von Taktsignal und dem ersten und zweiten Steuersignal dargestellt. Man erkennt, dass die erste und zweite Steuerschaltung 22, 23 das Einschalten des jeweiligen Schalters mit der steigenden Flanke des Taktsignals durch eine ebenfalls steigende Flanke des Steuersignals angibt. Für eine bestimmte Zeitdauer verbleiben die beiden Steuersignale auf den High-Pegeln. Man erkennt, dass das erste Steuersignal ST1 durch eine fallende Flanke den ersten Schalter 14 äusschaltet. Es wird dann ein geeignetes Aktiv-Signal in der Steuerschaltung 22 generiert, wenn der Schaltvorgang erfolgreich war und kein sonstiger Fehler aufgetreten ist. Dies wird der zweiten Steuerschaltung 23 übermittelt, die die fallende Flanke bezüglich des zweiten Steuersignals ST2 generiert, um den zweiten Schalter auszuschalten. Bis zur nächsten steigenden Flanke des Taktsignals CLK bleiben die Steuersignale auf einem Low-Pegel. Mit der nächsten steigenden Flanke des Taktsignals CLK gehen die beiden Steuersignale ST1, ST2 auf einem High-Pegel, wobei nun die zweite Steuerschaltung eine fallende Flanke des zweiten Steuersignals ST2 generiert. Die fallende Flanke des zweiten Steuersignals ST2 bewirkt ein Ausschalten des zweiten Schalters 15, wobei ein Aktiv-Signal generiert wird, wenn das Ausschalten des zweiten Schalters 15 erfolgt ist und kein weiterer Fehler aufgetreten ist. Das Aktiv-Signal bewirkt dann mit einer zu vernachlässigenden Zeitverzögerung ebenfalls das Ausschalten des ersten Schalters 14 gemäß einer fallenden Flanke des ersten Steuersignals ST1. So kann im Wechsel die Funktionsweise der Schalter 14, 15 bzw. der Bauelemente im jeweiligen Freilaufstrompfad überprüft werden, wobei das Generieren der Steuersignale sofort gestoppt wird, wenn ein Fehler erkannt wird.

## Patentansprüche

1. Verfahren zum Betreiben einer Versorgungseinheit für eine Treiberschaltung (5) einer Leistungsstufe (4), insbesondere in einer Leistungselektronik (3) für einen Elektromotor (2),
wobei ein Steuerstrom durch einen induktiven Wandler (11) mithilfe eines ersten und eines zweiten Schalters (14, 15) geschaltet wird, um eine Leistungsversorgung für die Leistungsstufe zu generieren,
wobei beim Ausschalten des ersten Schalters (14) ein Freilaufstrom durch einen Freilaufstrompfad (16) fließen kann,
mit folgenden Schritten:
a) Einschalten des ersten und zweiten Schalters (14, 15);
b) Ausschalten des ersten Schalters (14) bei einem Ausschaltvorgang;
c) Messen des Freilaufstromes durch den ersten Freilaufstrompfad(16);
d) Steuern des Schaltverhaltens des zweiten Schalters (15) abhängig von dem gemessenen ersten Freilaufstrom.

2. Verfahren nach Anspruch 1, wobei das Ausschalten des zweiten Schalters (15) blockiert wird, wenn beim Messen des Freilaufstroms durch den ersten Freilaufstrompfad (16) ein Fehler festgestellt wird.

3. Verfahren nach Anspruch 1, wobei ein weiteres Einschalten des ersten und des zweiten Schalters (14,1 5) blockiert wird, wenn beim Messen des Freilaufstroms (16) durch den ersten Freilaufstrompfad ein Fehler festgestellt wird.

4. Verfahren nach einem der Ansprüche 1 bis 3, wobei der Fehler festgestellt wird, wenn der erste Freilaufstrom unterhalb eines jeweils vorgegebenen Schwellenstroms liegt.

5. Verfahren nach einem der Ansprüche 1 bis 4, wobei beim Ausschalten des zweiten Schalters (15) ein Freilaufstrom durch einen zweiten Freilaufstrompfad (17) fließen kann, mit folgenden weiteren Schritten:
e) Einschalten des ersten und zweiten Schalters (14, 15);
f) Ausschalten des zweiten Schalters (15) bei einem weiteren Ausschaltvorgang;
g) Messen eines Freilaufstroms durch den zweiten Freilaufstrompfad (17);
h) Steuern des Schaltverhaltens des ersten Schalters (14) abhängig von dem gemessenen Freilaufstrom durch den zweiten Freilaufstrompfad (17).

6. Verfahren nach Anspruch 5, wobei das Ausschalten des ersten Schalters (14) blockiert wird, wenn beim Messen des Freilaufstroms durch den zweiten Freilaufstrompfad (17) ein Fehler festgestellt wird.

7. Verfahren nach Anspruch 5, wobei ein weiteres Einschalten des ersten und des zweiten Schalters (14, 15) blockiert wird, wenn beim Messen des Freilaufstroms durch den zweiten Freilaufstrompfad (17) ein Fehler festgestellt wird.

8. Verfahren nach einem der Ansprüche 1 bis 7, wobei die Schalter (14, 15) durch ein erstes bzw. zweites Steuersignal angesteuert werden, wobei das erste und/oder zweite Steuersignal mithilfe eines periodischen Signals generiert wird.

9. Verfahren nach Anspruch 8, wobei das periodische Signal zum Generieren des ersten und/oder des zweiten Steuersignals blockiert wird, wenn beim Messen der Freilaufstroms durch den ersten und/oder den zweiten Freilaufstrompfad (16, 17) ein Fehler festgestellt wird.

10. Verfahren nach einem der Ansprüche 6 oder 7, wobei der Fehler festgestellt wird, wenn der Freilaufstrom durch den zweiten Freilaufstrompfad (17) unterhalb eines jeweils vorgegebenen Schwellenstroms liegt.

11. Versorgungseinheit (6) zum Betreiben einer Treiberschaltung (5) für eine Leistungsstufe (4) mit einer Leistungsversorgung, insbesondere in einer Leistungselektronik (3) für einen Elektromotor (2),
mit einem induktiven Wandler (11), um die Leistungsversorgung für die Leistungsstufe (4) zu generieren,
mit einem ersten und einem zweiten Schalter (14, 15), die mit dem induktiven Wandler (11) in Reihe geschaltet sind, wobei die Leistungsversorgung in dem induktiven Wandler (11) durch Ein- und Ausschalten des ersten und zweiten Schalters (14, 15) erzeugbar ist,
mit einem mit dem ersten Schalter (14) verbundenen ersten Freilaufstrompfad (16), um einen Freilaufstrom bei einem Ausschaltvorgang des ersten Schalters (14) aufzunehmen,
wobei die Steuereinrichtung so gestaltet ist, um bei einem Einschaltvorgang den ersten und den zweiten Schalter (14, 15) einzuschalten, und um bei einem Ausschaltvorgang zunächst den ersten Schalter (14) auszuschalten und einen Freilaufstrom durch den ersten Freilaufstrompfad (16) zu messen, und um abhängig von dem gemessenen Freilaufstrom den zweiten Schalter (15) zu schalten.

12. Versorgungseinheit (6) nach Anspruch 11, wobei ein zweiter Freilaufstrompfad mit dem zweiten Schalter verbunden ist, um einen Freilaufstrom bei einem Ausschaltvorgang des zweiten Schalters aufzunehmen, wobei die Steuereinrichtung weiterhin so gestaltet ist, um bei einem weiteren Ausschaltvorgang zunächst den zweiten Schalter (15) auszuschalten und einen Freilaufstrom durch den zweiten Freilaufstrompfad (17) zu messen, und abhängig von dem gemessenen Freilaufstrom den ersten Schalter (14) zu schalten.

13. Versorgungseinheit (6) nach Anspruch 12, wobei der erste Freilaufstrompfad einen ersten Stromsensor (20) und/oder eine erste Freilaufdiode (18) aufweist und/oder wobei der zweite Freilaufstrompfad (17) einen zweiten Stromsensor (21) und/oder eine zweite Freilaufdiode (19) aufweist.

14. Versorgungseinheit (6) nach Anspruch 13,
wobei die Steuereinrichtung eine erste Steuerschaltung (22) und eine zweite davon getrennte Steuerschaltung (23) umfasst,
wobei die erste Steuerschaltung (22) das Schalten des ersten Schalters (14) steuert und den Strom durch den ersten Freilaufstrompfad (16) misst,
wobei die zweite Steuerschaltung (23) das Schalten des zweiten Schalters (15) steuert und den Strom durch den zweiten Freilaufstrompfad (17) misst,
und wobei die erste Steuerschaltung (22) und die zweite Steuerschaltung (23) so miteinander gekoppelt sind, dass die erste Steuerschaltung (22) den ersten Schalter abhängig von einem von der zweiten Steuerschaltung (23) angelegten zweiten Aktiv-Signal schaltet,
und dass die zweite Steuerschaltung (23) den zweiten Schalter abhängig von einem von der ersten Steuerschaltung angelegten ersten Aktiv-Signal schaltet.

15. Versorgungseinheit (6) nach einem der Ansprüche 10 bis 12, wobei die ersten Steuerschaltung (22) und/oder die zweite Steuerschaltung (23) bei einer Funktionsstörung kein jeweiliges erstes bzw. zweites Aktiv-Signal generieren.

16. Versorgungseinheit (6) nach Anspruch 14 oder 15, wobei das erste und das zweite Aktiv-Signal jeweils ein periodisches Signal ist, das von der ersten bzw. zweite Steuerschaltung (22, 23) generiert wird.

17. Versorgungseinheit (6) nach einem der Ansprüche 14 bis 16, wobei die erste und die zweite Steuerschaltung (22, 23) jeweils so gestaltet sind, um das Schalten des ersten bzw. des zweiten Schalters (14, 15)zu blockieren, wenn beim Messen des Freilaufstroms durch den ersten und/oder den zweiten Freilaufstrompfad (16, 17) ein Fehler festgestellt wird.

18. Versorgungseinheit (6) nach Anspruch 17, wobei der Fehler feststellbar ist, wenn mindestens einer der Freilaufströme unterhalb eines jeweils vorgegebenen Schwellenstroms liegt.

19. Versorgungseinheit (6) nach einem der Ansprüche 11 bis 18, wobei der induktive Wandler (11) einen Transformator umfasst.

20. Versorgungseinheit (6) nach einem der Ansprüche 17 oder 18, wobei der Schalter durch ein erstes bzw. ein zweites Steuersignal ansteuerbar sind, wobei die Steuereinrichtung so gestaltet ist, um das erste und/oder das zweite Steuersignal mit Hilfe eines bereitgestellten Taktsignals zu generieren, wobei bei Auftreten eines Fehlers das Taktsignal unterbrochen wird, so dass das Generieren des ersten und des zweiten Steuersignals unterbrochen wird.

## Claims

1. A method for operating a supply unit for a driver circuit (5) in a power stage (4), particularly in a power electronic circuit (3) for an electric motor (2),
where a control current through an inductive converter (11) is switched using a first and a second switch (14, 15) in order to generate a power supply for the power stage,
where turning off the first switch (14) allows a free-wheeling current to flow through a free-wheeling current path (16),
having the following steps:
a) first and second switches (14, 15) are turned on;
b) the first switch (14) is turned off in a turn-off operation;
c) the free-wheeling current through the first free-wheeling current path (16) is measured;
d) the switching behavior of the second switch (15) is controlled on the basis of the measured first free-wheeling current.

2. The method as claimed in claim 1, where the second switch (15) is prevented from being turned off if measurement of the free-wheeling current for the first free-wheeling current path (16) detects a fault.

3. The method as claimed in claim 1, where the first and second switches (14, 15) are prevented from being turned on again if measurement of the free-wheeling current (16) through the first free-wheeling current path detects a fault.

4. The method as claimed in one of claims 1 to 3, where the fault is detected if the first free-wheeling current is below a respective prescribed threshold current.

5. The method as claimed in one of claims 1 to 4, where turning off the second switch (15) allows a free-wheeling current to flow through a second free-wheeling current path (17), having the following further steps:
e) the first and second switches (14, 15) are turned on;
f) the second switch (15) is turned off in a further turn-off operation;
g) a free-wheeling current through the second free-wheeling current path (17) is measured;
h) the switching behavior of the first switch (14) is controlled on the basis of the measured free-wheeling current through the second free-wheeling current path (17).

6. The method as claimed in claim 5, where the first switch (14) is prevented from being turned off if measurement of the free-wheeling current through the second free-wheeling current path (17) detects a fault.

7. The method as claimed in claim 5, where the first and second switches (14, 15) are prevented from being turned on again if measurement of the free-wheeling current through the second free-wheeling current path (17) detects a fault.

8. The method as claimed in one of claims 1 to 7, where the switches (14, 15) are actuated by a first or second control signal, with the first and/or second control signal being generated using a periodic signal.

9. The method as claimed in claim 8, where the periodic signal is blocked for generating the first and/or second control signal if measurement of the free-wheeling current through the first and/or the second free-wheeling current path (16, 17) detects a fault.

10. The method as claimed in either of claims 6 and 7, where the fault is detected if the free-wheeling current through the second free-wheeling current path (17) is below a respective prescribed threshold current.

11. A supply unit (6) for operating a driver circuit (5) for a power stage (4) with a power supply, particularly in a power electronics circuit (3) for an electric motor (2),
having an inductive converter (11) in order to generate the power supply for the power stage (4),
having a first and a second switch (14, 15) which are connected in series with the inductive converter (11), with the power supply in the inductive converter (11) being able to be produced by turning on and off the first and second switches (14, 15),
having a first free-wheeling current path (16) connected to the first switch (14) in order to accept a free-wheeling current in a turn-off operation for the first switch (14),
where the control device is designed so that, in a turn-on operation, it turns on the first and second switches (14, 15) and, in a turn-off operation, it first of all turns off the first switch (14) and measures a free-wheeling current through the first free-wheeling current path (16), and switches the second switch (15) on the basis of the measured free-wheeling current.

12. The supply unit (6) as claimed in claim 11, where a second free-wheeling current path is connected to the second switch in order to accept a free-wheeling current in a turn-off operation for the second switch, where the control device is furthermore designed so that, in a further turn-off operation, it first of all turns off the second switch (15) and measures a free-wheeling current through the second free-wheeling current path (17), and switches the first switch (14) on the basis of the measured free-wheeling current.

13. The supply unit (6) as claimed in claim 12, where the first free-wheeling current path has a first current sensor (20) and/or a first free-wheeling diode (18), and/or where the second free-wheeling current path (17) has a second current sensor (21) and/or a second free-wheeling diode (19).

14. The supply unit (6) as claimed in claim 13,
where the control device comprises a first control circuit (22) and a second control circuit (23), which is separate from the latter,
where the first control circuit (22) controls the switching of the first switch (14) and measures the current through the first free-wheeling current path (16),
where the second control circuit (23) controls the switching of the second switch (15) and measures the current through the second free-wheeling path (17),
and where the first control circuit (22) and the second control circuit (23) are coupled to one another such that the first control circuit (22) switches the first switch on the basis of a second Active signal which is applied by the second control circuit (23),
and that the second control circuit (23) switches the second switch on the basis of the first Active signal which is applied by the first control circuit.

15. The supply unit (6) as claimed in one of claims 10 to 12, where the first control circuit (22) and/or the second control circuit (23) do not generate a respective first or second Active signal in the event of a malfunction.

16. The supply unit (6) as claimed in claim 14 or 15, where the first and second Active signals are a respective periodic signal which is generated by the first or second control circuit (22, 23).

17. The supply unit (6) as claimed in one of claims 14 to 16, where the first and second control circuits (22, 23) are respectively designed to prevent the switching of the first or second switch (14, 15) if measurement of the free-wheeling current through the first and/or the second free-wheeling current path (16, 17) detects a fault.

18. The supply unit (6) as claimed in claim 17, where the fault can be detected if at least one of the free-wheeling currents is below a respective prescribed threshold current.

19. The supply unit (6) as claimed in one of claims 11 to 18, where the inductive converter (11) comprises a transformer.

20. The supply unit (6) as claimed in either of claims 17 and 18, where the switch can be actuated by a first or a second control signal, where the control device is designed to generate the first and/or the second control signal using a provided clock signal, with the clock signal being interrupted if a fault occurs, which means that the generation of the first and second control signals is interrupted.

## Revendications

1. Procédé pour faire fonctionner une unité d'alimentation d'un circuit (5) d'attaque d'un étage (4) de puissance, notamment dans une électronique (3) de puissance pour un moteur (2) électrique,
dans lequel on fait passer un courant de commande dans un convertisseur (11) inductif à l'aide d'un premier et d'un deuxième interrupteur (14, 15) pour engendrer une alimentation de puissance de l'étage de puissance,
dans lequel, lorsque le premier interrupteur (14) est ouvert, un courant de roue libre peut passer par un trajet (16) de courant de roue libre,
comprenant des stades suivants :
a) on ferme le premier et le deuxième interrupteur (14, 15) ;
b) on ouvre le premier interrupteur (14) lors d'une opération d'ouverture ;
c) on mesure le courant de roue libre passant dans le premier trajet (16) de courant de roue libre ;
d) on commande le comportement de coupure du deuxième interrupteur (15) en fonction du premier courant de roue libre qui est mesuré.

2. Procédé suivant la revendication 1, dans lequel on bloque l'ouverture du deuxième interrupteur (15) si l'on constate un défaut lors de la mesure du courant de roue libre passant dans le premier trajet (16) de courant de roue libre.

3. Procédé suivant la revendication 1, dans lequel on bloque une fermeture supplémentaire du premier et du deuxième interrupteur (14, 15) si l'on constate un défaut lors de la mesure du courant de roue libre passant dans le premier trajet (16) de courant de roue libre.

4. Procédé suivant l'une des revendications 1 à 3, dans lequel on constate le défaut si le premier courant de roue libre devient inférieur à un courant de seuil prescrit.

5. Procédé suivant l'une des revendications 1 à 4, dans lequel, lors de l'ouverture du deuxième interrupteur (15), un courant de roue libre peut passer dans un deuxième trajet (17) de courant de roue libre, ayant des stades supplémentaires suivants :
e) on ferme le premier et le deuxième interrupteur (14, 15) ;
f) on ouvre le deuxième interrupteur (15) lors d'une opération d'ouverture supplémentaire ;
g) on mesure le courant de roue libre passant dans le deuxième trajet (17) de courant de roue libre ;
h) on commande le comportement de coupure du premier interrupteur (14) ;
en fonction du courant de roue libre passant dans le deuxième trajet (17) de courant de roue libre, qui est mesuré.

6. Procédé suivant la revendication 5, dans lequel on bloque l'ouverture du premier interrupteur (14) si l'on constate un défaut lors de la mesure du courant de roue libre passant dans le deuxième trajet (17) de courant de roue libre.

7. Procédé suivant la revendication 5, dans lequel on bloque une fermeture supplémentaire du premier et du deuxième interrupteur (14, 15) si l'on constate un défaut lors de la mesure du courant de roue libre passant dans le deuxième trajet (17) de courant de roue libre.

8. Procédé suivant l'une des revendications 1 à 7, dans lequel on commande les interrupteurs (14, 15) par un premier ou un deuxième signal de commande, le premier et/ou le deuxième signal de commande étant produit(s) au moyen d'un signal périodique.

9. Procédé suivant la revendication 8, dans lequel on bloque le signal périodique de production du premier et/ou du deuxième signal de commande si l'on constate un défaut lors de la mesure du courant de roue libre passant dans le premier et/ou le deuxième trajet (16, 17) de courant de roue libre.

10. Procédé suivant l'une des revendications 6 ou 7, dans lequel on constate un défaut si le courant de roue libre passant dans le deuxième trajet (17) de courant de roue libre est inférieur à un courant de seuil prescrit.

11. Unité (6) d'alimentation pour faire fonctionner un circuit (5) d'attaque d'un étage (4) de puissance, comprenant une alimentation en puissance, notamment dans une électronique (3) de puissance d'un moteur (2) électrique,
comprenant un convertisseur (11) inductif pour produire l'alimentation en puissance de l'étage (4) de puissance, un premier et un deuxième interrupteur (14, 15) qui sont montés en série avec le convertisseur (11) inductif, l'alimentation en puissance du convertisseur (11) inductif pouvant être produite en fermant et en ouvrant le premier et le deuxième interrupteur (14, 15),
comprenant un premier trajet (16) de roue libre relié au premier interrupteur (14) pour enregistrer un courant de roue libre lors d'une opération d'ouverture du premier interrupteur (14),
dans laquelle le dispositif de commande est conçu pour fermer, lors d'une opération de fermeture du premier et du deuxième interrupteur (14), et pour ouvrir, lors d'une opération d'ouverture, d'abord le premier interrupteur (14) et pour mesurer un courant de roue libre passant dans le premier trajet (16) de courant de roue libre et pour commuter le deuxième interrupteur (15) en fonction du courant de roue libre mesuré.

12. Unité (6) d'alimentation suivant la revendication 11, dans laquelle un deuxième trajet de courant de roue libre est relié au deuxième interrupteur pour enregistrer un courant de roue libre lors d'une opération d'ouverture du deuxième interrupteur, le dispositif de commande étant, en outre, conçu pour ouvrir d'abord le deuxième interrupteur (15) lors d'une opération supplémentaire d'ouverture et mesurer un courant de roue libre passant dans le deuxième trajet (17) de courant de roue libre et pour commuter le premier interrupteur (14) en fonction du courant de roue libre mesuré.

13. Unité (6) d'alimentation suivant la revendication 12, dans laquelle le premier trajet de courant de roue libre a un premier capteur (20) de courant et/ou une première diode (18) de roue libre et/ou dans laquelle le deuxième trajet (17) de courant de roue libre a un deuxième capteur (21) de courant et/ou une deuxième diode (19) de roue libre.

14. Unité (6) d'alimentation suivant la revendication 13,
dans laquelle le dispositif de commande comprend un premier circuit (22) de commande et un deuxième circuit (23) de commande qui en est distinct,
dans laquelle le premier circuit (22) de commande commande la commutation du premier interrupteur (14) et mesure le courant passant dans le premier trajet (16) de courant de roue libre,
dans laquelle le deuxième circuit (23) de commande commande la commutation du deuxième interrupteur (15) et mesure le courant passant dans le deuxième trajet (17) de courant de roue libre,
et dans laquelle le premier circuit (22) de commande et le deuxième circuit (23) de commande sont couplés entre eux,
de façon à ce que le premier circuit (22) de commande commute le premier interrupteur en fonction d'un deuxième signal actif appliqué par le deuxième circuit (23) de commande,
et de façon à ce que le deuxième circuit (23) de commande commute le deuxième interrupteur en fonction d'un premier signal actif appliqué par le premier circuit de commande.

15. Unité (6) d'alimentation suivant l'une des revendications 10 à 12, dans laquelle le premier circuit (22) de commande et/ou le deuxième circuit (23) de commande ne produisent pas, respectivement, de premier ou de deuxième signal actif lors d'une panne de fonctionnement.

16. Unité (6) d'alimentation suivant la revendication 14 ou 15, dans laquelle le premier et le deuxième signal actif est, respectivement, un signal périodique qui est produit par le premier ou le deuxième circuit (22, 23) de commande.

17. Unité (6) d'alimentation suivant l'une des revendications 14 à 16, dans laquelle le premier et le deuxième circuit (22, 23) de commande sont conçus, respectivement, pour bloquer la commutation du premier ou du deuxième interrupteur (14, 15) si l'on constate un défaut lors de la mesure du courant de roue libre passant dans le premier et/ou le deuxième trajet (16, 17) de courant de roue libre.

18. Unité (6) d'alimentation suivant la revendication 17, dans laquelle on peut constater le défaut si au moins l'un des courants de roue libre est inférieur à un courant de seuil prescrit.

19. Unité (6) d'alimentation suivant l'une des revendications 11 à 18, dans laquelle le convertisseur (11) inductif comprend un transformateur.

20. Unité (6) d'alimentation suivant l'une des revendications 17 ou 18, dans laquelle on peut commander les interrupteurs par un premier ou par un deuxième signal de commande, le dispositif de commande étant conçu pour produire le premier et/ou le deuxième signal de commande à l'aide d'un signal d'horloge mis à disposition, le signal d'horloge étant interrompu lors de l'apparition d'un défaut, de sorte que la production du premier et du deuxième signal de commande est interrompue.
